# EUROPÄISCHE PATENTSCHRIFT

(11) **EP 3 372 312 B1**
(45) Veröffentlichungstag und Bekanntmachung des Hinweises auf die Patenterteilung: **30.01.2019**
(21) Anmeldenummer: 18000085.3
(22) Anmeldetag: 01.02.2018
(51) Int. Cl.: B01L 9/06, B01L 3/00, G01N 35/00, B03C 1/28, B03C 1/033

(54) **KUNSTSTOFF-MAGNETSEPARATIONSPLATTE ZUR DURCHFÜHRUNG AUTOMATISIERTER MAGNETSEPARATIONSPROZESSE**
PLASTIC MAGNET SEPARATING PLATE FOR PERFORMING AN AUTOMATED MAGNET SEPARATION PROCESS
PLAQUE DE SÉPARATION MAGNÉTIQUE EN MATIÈRE PLASTIQUE PERMETTANT DE METTRE EN UVRE DES PROCÉDÉS DE SÉPARATION MAGNÉTIQUE AUTOMATISÉS

(30) Priorität: 09.03.2017 DE 202017001238 U
(43) Veröffentlichungstag der Anmeldung: 12.09.2018
(73) Patentinhaber: Ritter GmbH, 86830 Schwabmünchen (DE)
(72) Erfinder: Ritter, Frank, 87745 Eppishausen (DE)
(74) Vertreter: Gallo, Wolfgang

(56) Entgegenhaltungen:
- EP-A2- 1 130 397
- DE-A1-102009 021 201
- US-A1- 2001 022 948
- US-A1- 2004 157 224

## Beschreibung

Die Erfindung betrifft Magnetseparationsplatten aus Kunststoff als Laborgeräte zur Durchführung einer automatisierten Magnetseparation in Magnetseparations-Automaten, beispielsweise zur Aufreinigung von Proteinen oder zur DNA-Extraktion. Solche Magnet-separationsplatten werden in Kunststoffspritzgusstechnik gefertigt und bestehen aus einer Grundplatte, die eine Matrix von x mal y Gefäßen bildet, und einer kammartigen Hohlstabplatte mit einer Matrix von x mal y hohler Stäbe, die jeweils mit ihrem oberen offenen Ende mit einer Trägerplatte verbunden sind und zur Aufnahme jeweils eines Magnetstabs dienen und im Gebrauch jeweils in ein Gefäß der Grundplatte eintauchen. Die Hohlstäbe sind an ihrem unteren Ende durch einen radial auswärts vorspringenden Bund erweitert, um lokal einen relativ engen Spalt zwischen dem Stab und der Gefäßwand zu erzeugen, um die Probeflüssigkeit relativ schnell durch den verengten Spalt strömen zu lassen, wenn der Stab in Betrieb vertikal auf und ab bewegt wird, um das Mischen und den Massentransfer zu verbessern.

Eine Kunststoff-Magnetseparationsplatte mit einer Grundplatte, die eine Matrix von x mal y Gefäßen bildet, und mit an einer kammartigen Platte angeordneten hohlen Stäben, die an ihrem unteren Ende einen auswärts vorspringenden Bund haben, ist aus der Druckschrift US 2004/0 157 224 A1 bekannt.

Bei einer bekannten Ausführungsform der Stabplatte sind die hohlen Stäbe jeweils separat gefertigt und werden dann mit ihrem oberen offenen Ende mit der ebenfalls separat gefertigten Trägerplatte verbunden, indem sie auf einen an der Trägerplatte angeformten Rohransatz aufgesteckt und damit verbunden werden. Diese aufwendige Fertigungstechnik ist erforderlich, weil wegen der Erweiterung des unteren Endes jedes hohlen Stabs durch den radial vorstehenden Ringbund eine einstückige Fertigung der Trägerplatte mit den Stäben nicht möglich ist, da dann ein Entformen nicht mehr möglich wäre.

Aufgabe der Erfindung ist es, eine verbesserte Magnetseparationsplatte zu schaffen, bei welcher die Stabplatte insgesamt als einstückiger Körper im Spritzgußverfahren hergestellt werden kann.

Diese Aufgabe wird gemäß der Erfindung durch die im Anspruch 1 angegebene Anordnung gelöst. Vorteilhafte Ausgestaltungen der Erfindung sind Gegenstand der Unteransprüche.

Bei der erfindungsgemäßen Magnetseparationsplatte sind die hohlen Stäbe der Stabplatte nicht mehr, wie bei der oben erwähnten herkömmlichen Ausführungsform, an ihrem ganzen Umfang mit der Trägerplatte verbunden, nämlich auf jeweils einen an der Trägerplatte angeformten ringförmigen Rohrstutzen aufgesteckt und damit verbunden. Vielmehr weist jeder hohle Stab an seinem Außenumfang eine Mehrzahl von beispielsweise drei oder vier axial verlaufenden Rippen auf, die sich von dem radial vorstehenden Ringbund am unteren Endbereich des hohlen Stabs nach oben erstrecken und am oberen Ende einstückig mit der Trägerplatte verbunden sind, während die Trägerplatte zwischen den einzelnen Rippen ringsegmentförmige Aussparungen aufweist, deren Außendurchmesser mindestens den Außendurchmesser des Ringbunds am unteren Endbereich des hohlen Stabs entspricht.

Dadurch entsteht eine hinterschneidungsfreie Formgestaltung, die das Spritzgießen des Stabplattenkörpers in einem Stück in einer zweiteiligen Spritzgießform ermöglicht, deren beide Formteile in Richtung der Achse der hohlen Stäbe geöffnet und geschlossen werden können.

Ein Ausführungsbeispiel der Erfindung wird nachstehend unter Bezugnahme auf die anliegenden Zeichnungen mehr im einzelnen beschrieben, in denen zeigt:
- Fig. 1: in perspektivischer Darstellung die Grundplatte einer aus Grundplatte und Stabplatte bestehenden Magnetseparationsplatte nach der Erfindung,
- Fig. 2: in perspektivischer Ansicht die Stabplatte der Magnetseparationsplatte nach der Erfindung,
- Fig. 3: die Stabplatte nach Fig. 2 in Seitenansicht, auf die Schmalseite gesehen, und
- Fig. 4: einen zwei Stäbe umfassenden vergrößerten Ausschnitt der Stabplatte nach Fig. 2.

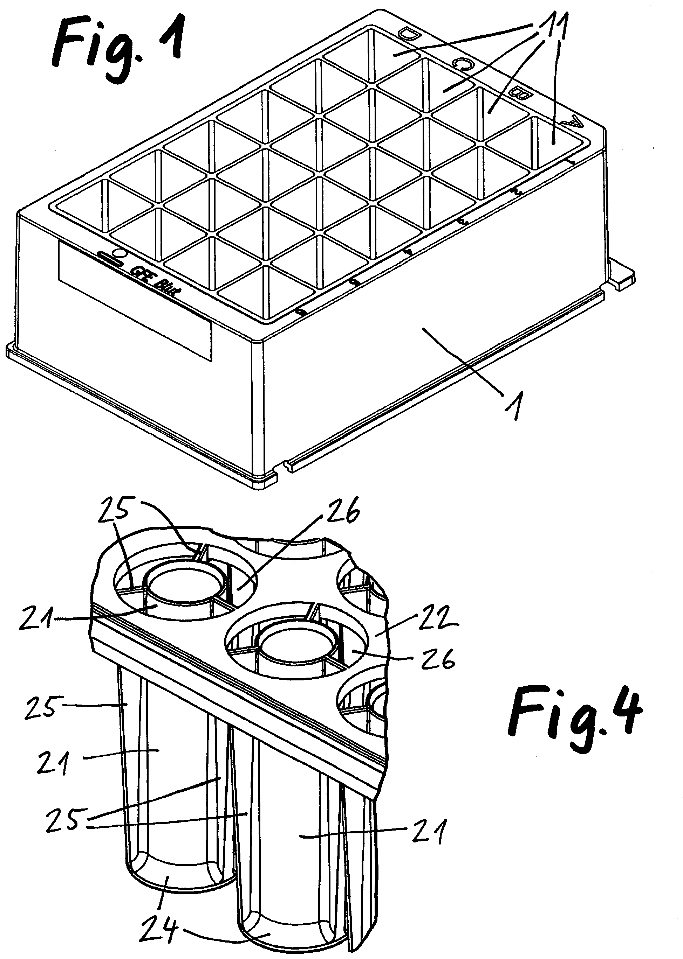

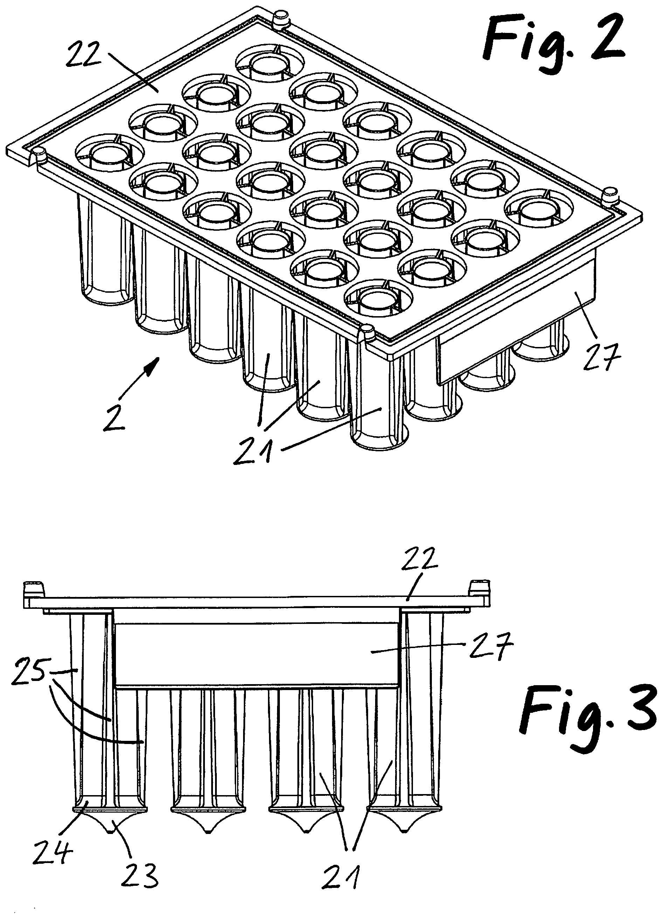

Die Figuren 1 und 2 zeigen in jeweils perspektivischer Ansicht die Grundplatte 1 und die Stabplatte 2 einer aus diesen beiden Komponenten bestehenden Magnetseparationsplatte nach der Erfindung.

Die Grundplatte 1 bildet eine Matrix von x mal y, beim Ausführungsbeispiel von 4 x 6 Gefäßen 11, die in ihrem oberen Bereich jeweils einen quadratischen Querschnitt haben und in einem unteren Bereich (in der Darstellung nicht sichtbar) in einen kreisrunden Querschnitt übergehen.

Die Stabplatte 2 hat, entsprechend der Gefäßmatrix der Grundplatte 1, eine Anordnung von x mal y, beim Ausführungsbeispiel von 4 x 6 hohlen Stäben 21, die mit ihren oberen Enden mit einer horizontalen Trägerplatte 22 verbunden sind. Wie aus der Seitenansicht nach Fig. 3 ersichtlich ist, hat jeder der hohlen Stäbe 21 an seinem unteren Endbereich unmittelbar vor seinem kegeligen Boden 23 eine radiale Erweiterung in Gestalt eines radial vorspringenden Ringbunds 24. Jeder der hohlen Stäbe 21 dient zur Aufnahme eines Magnetstabs zum Durchführen der Magnetseparation und taucht im Gebrauch in ein entsprechendes der Gefäße 11 der Grundplatte 1 ein.

Wie weiter aus dem vergrößerten Ausschnitt in Figur 4 erkennbar ist, hat jeder der hohlen Stäbe 21 an seinem Umfang mehrere, beim gezeigten Ausführungsbeispiel drei Rippen 25, die in axialer Richtung entlang der Außenseite des hohlen Stabs 21 verlaufen. Es können beispielsweise auch vier Rippen sein. Diese Rippen 25 verlaufen von dem Ringbund 24 am unteren Ende des hohlen Stabs 21 aus (der kegelige Boden 23 jedes Stabs ist in Figur 4 nicht sichtbar) entlang der Außenwand des hohlen Stabs nach oben und endigen am oberen Ende des hohlen Stabs 21 flächenbündig mit der Oberseite der Trägerplatte 22.

Die radiale Ausdehnung der Rippen 25 erstreckt sich am unteren Ende über die radiale Ausdehnung des jeweiligen Ringbunds 24. Am oberen Ende jedes hohlen Stabs 21 hat die Trägerplatte 22 eine kreisrunde Aussparung 26, deren Durchmesser mindestens so groß ist wie der Außendurchmesser des Ringbunds 24 am unteren Ende jedes hohlen Stabs 21. Wie man am deutlichsten aus Figur 4 sieht, erstrecken sich die Rippen 25 am oberen Ende jedes hohlen Stabs 21 radial durch die kreisrunde Aussparung 26 hindurch und verbinden so den jeweiligen hohlen Stab 21 mit der Trägerplatte 22. Allgemeiner ausgedrückt, muß die Flächenausdehnung der Aussparung 26 mindestens der Projektion des Ringbunds 24 auf die Trägerplatte entsprechen.

Beim dargestellten Ausführungsbeispiel verbreitern sich die Rippen 25 vom Ringbund 24 aus nach oben zur Trägerplatte 22 hin etwas, und die kreisförmige Aussparung 26 in der Trägerplatte 22, in welche das obere Ende des jeweiligen hohlen Stabs 21 mit dem oberen Ende der Rippen 25 eintaucht, ist dementsprechend etwas größer als der Durchmesser des Ringbunds 24.

Aufgrund dieser Anordnung kann die gesamte Stabplatte trotz des an jedem Stab 21 unten befindlichen, radial vorspringenden Ringbunds 24 einstückig in Spritzgußtechnik gefertigt werden.

An mindestens einer Schmalseite hat die Stabplatte 2, wie aus den Fig. 2 und 3 ersichtlich ist, eine als vertikale Schürze angeformte Beschriftungsträgerplatte 27 zum Anbringen eines Etiketts oder einer Beschriftung, beispielweise eines Barcodes.

## Patentansprüche

1. Kunststoff-Magnetseparationsplatte zur Durchführung automatisierter Magnetseparationsprozesse, bestehend aus einer Grundplatte (1), in der eine Matrix von x mal y Gefäßen (11) gebildet ist, und aus einer kammartigen Hohlstabplatte (2) mit einer Matrix von x mal y hohler Stäbe (21), die jeweils mit ihrem oberen offenen Ende mit einer horizontalen Trägerplatte (22) verbunden sind und an ihrem unteren Endbereich einen radial auswärts vorstehenden Ringbund (24) aufweisen,
**dadurch gekennzeichnet, dass** die Trägerplatte (22) der Hohlstabplatte (2) an der Anordnungsstelle jedes Hohlstabs (21) eine Aussparung (26) hat, deren Ausdehnung mindestens der Projektion des Ringbunds (24) auf die Trägerplatte (22) entspricht, und dass jeder Hohlstab (21) an seinem Außenumfang eine Mehrzahl von radialen, entlang der Hohlstabachse verlaufenden Rippen (25) aufweist, die von dem Ringbund (24) ausgehend zum oberen Ende des Hohlstabs (21) verlaufen und dort sich radial durch die Aussparung (26) der Trägerplatte (22) erstreckend den Hohlstab (21) mit der Trägerplatte (22) einstückig verbinden.

2. Magnetseparationsplatte nach Anspruch 1, wobei die jeweilige Aussparung (26) in der Trägerplatte (22) kreisrund ist und einen Durchmesser hat, der mindestens dem Außendurchmesser des Ringbunds (24) entspricht.

3. Magnetseparationsplatte nach Anspruch 2, wobei der Durchmesser der Aussparung (26) in der Trägerplatte (22) größer ist als der Außendurchmesser des Ringbunds (24).

4. Magnetseparationsplatte nach Anspruch 3, wobei die Rippen (25) sich vom Ringbund (24) aus nach oben zur Trägerplatte (22) hin verbreitern.

5. Magnetseparationsplatte nach einem der Ansprüche 1 bis 4, mit einer an mindestens einem Rand der Trägerplatte (22) in Gestalt einer vertikalen Schürze angeformten Beschriftungsträgerplatte (27).

## Claims

1. A magnetic separation plate made of a plastic material for performing automated magnetic separation processes, consisting of a base plate (1) in which a matrix of *m x n* wells (11) is formed, and of a comb-like hollow rod plate (2) with a matrix of *m x n* hollow rods (21) each connected with its upper end to a horizontal carrier plate (22) and having a radially outwardly protruding ring collar (24) on its lower end region,
**characterised in that** the carrier plate (22) of the hollow rod plate (2) has a recess (26) on the position of placement of each hollow rod (21), the extension of the recess corresponding at least to the projection of the ring collar (24) onto the carrier plate (22), and **in that** each hollow rod (21) has a plurality of radial ribs (25) on its outer circumference that extend along the axis of the hollow rod, the ribs extending towards the upper end of the hollow rod (21) starting from the ring collar (24) and there connecting the hollow rod (21) to the carrier plate (22) in one piece while extending radially through the recess (26) of the carrier plate (22).

2. The magnetic separation plate according to claim 1, wherein the respective recess (26) in the carrier plate (22) is circular and has a diameter corresponding at least to the outer diameter of the ring collar (24).

3. The magnetic separation plate according to claim 2, wherein the diameter of the recess (26) in the carrier plate (22) is larger than the outer diameter of the ring collar (24).

4. The magnetic separation plate according to claim 3, wherein the ribs (25) enlarge starting from the ring collar (24) upwards toward the carrier plate (22).

5. The magnetic separation plate according to any one of claims 1 to 4, having a marking carrier plate (27) in the shape of a vertical skirt formed onto at least an edge of the carrier plate (22).

## Revendications

1. Plaque de séparation magnétique en matière plastique pour la réalisation de procédés de séparation magnétique automatisés, constituée d'une plaque de base (1) dans laquelle est formée une matrice de x fois y récipients (11) et d'une plaque de tige creuse (2) en forme de peigne avec une matrice de x fois y tiges creuses (21), qui sont chacune reliées à leur extrémité ouverte supérieure à une plaque support horizontale (22) et présentent un collet annulaire (24) dépassant radialement vers l'extérieur au niveau de leur partie inférieure,
**caractérisée en ce que** la plaque support (22) de la plaque de tige creuse (2) présente un évidement (26) à la position d'arrangement de chaque tige creuse (21), dont l'extension correspond au moins à la projection du collet angulaire (24) sur la plaque support (22), et **en ce que** chaque tige creuse (21) présente, sur sa circonférence extérieure, une pluralité de nervures (25) radiaux qui s'étendent le long de l'axe de la tige creuse, les nervures s'étendant à partir du collet angulaire (24) vers l'extrémité supérieure de la tige creuse (21), y passant à travers l'évidement (26) de la plaque support (22) et reliant la tige creuse (21) avec la plaque support (22) d'un seul tenant.

2. Plaque de séparation magnétique selon la revendication 1, dans laquelle l'évidement (26) dans la plaque support (22) est circulaire et a un diamètre correspondant au moins au diamètre extérieur du collet angulaire (24).

3. Plaque de séparation magnétique selon la revendication 2, dans laquelle le diamètre de l'évidement (26) dans la plaque support (22) est supérieur au diamètre extérieur du collet angulaire (24).

4. Plaque de séparation magnétique selon la revendication 3, dans laquelle les nervures (25) s'élargissent à partir du collet angulaire (24) vers le haut vers la plaque support (22).

5. Plaque de séparation magnétique selon l'une quelconque des revendications 1 à 4, avec une plaque porte-étiquette (27) moulée sur au moins un bord de la plaque support (22) sous forme d'un tablier vertical.
